# EUROPÄISCHE PATENTSCHRIFT

(11) **EP 0 496 209 B1**
(45) Veröffentlichungstag und Bekanntmachung des Hinweises auf die Patenterteilung: **10.09.1997**
(21) Anmeldenummer: 92100235.8
(22) Anmeldetag: 09.01.1992
(51) Int. Cl.: C08G 18/10, C08G 18/32

(54) **Härtergemisch für Isocyanatgruppen aufweisende Vorpolymere**
Hardening agent composition for isocyanate groups-containing prepolymers
Composition durcissante pour des prépolymères à groupes isocyanates

(30) Priorität: 22.01.1991 DE 4101700
(43) Veröffentlichungstag der Anmeldung: 29.07.1992
(73) Patentinhaber: BAYER AG, 51368 Leverkusen (DE)
(72) Erfinder: Schmalstieg, Lutz, Dr., W-5000 Köln 1 (DE); Pedain, Josef, Dr., W-5000 Köln 80 (DE); Pisaric, Karl Heinz, W-5024 Pulheim (DE); Träubel, Harro, Dr., W-5090 Leverkusen 1 (DE)

(56) Entgegenhaltungen:
- EP-A- 0 291 850
- EP-A- 0 319 816
- GB-A- 1 200 718
- US-A- 702 777

## Beschreibung

Die Erfindung betrifft ein neues, organische Polyamine enthaltendes Härtergemisch für Isocyanatgruppen aufweisende Vorpolymere, ein Verfahren zur Herstellung von Polyurethanpolyharnstoffen unter Verwendung dieses Härtergemischs und die Verwendung der so erhältlichen Polyurethanharnstoffe zur Beschichtung von Leder, Spaltleder oder textilen Substraten.

Polyurethanharnstoffe werden im allgemeinen durch Umsetzung eines NCO-Gruppen enthaltenden Vorpolymeren (Prepolymeren) mit Polyaminen hergestellt und sind von erheblicher technischer Bedeutung z.B. für Beschichtungen, Folien, Überzüge und Imprägnierungen sowie auf dem Elastomergebiet.

Um die exotherme Reaktion von Polyaminen mit Polyisocyanaten zu beherrschen bzw. zu steuern, werden gemäß Stand der Technik verschiedene Methoden angewandt. So können beispielsweise Polyamine eingesetzt werden, die aufgrund ihrer chemischen Natur in ihrer Reaktivität gegenüber Polyisocyanaten gebremst sind. Dies sind insbesondere aromatische Polyamine, deren Reaktivität gegenüber Isocyanaten so gering ist, daß sie mit NCO-Gruppen enthaltenden Prepolymeren in geeigneten Maschinen homogen vermischt werden können. Die Mischungen bleiben ausreichend lange flüssig, so daß sie vergossen, verspritzt oder gerakelt werden können. Beispielhaft für diesen Stand der Technik seien die DE-OS 15 70 524 und die DE-OS 15 95 577 genannt. Aromatische Polyamine weisen jedoch verschiedene Nachteile auf. Sie sind zum großen Teil physiologisch bedenklich, sie vergilben an Luft und Licht und sind deshalb nicht geeignet zur Herstellung lichtechter Beschichtungen.

Aliphatische und cycloaliphatische Diamine können nur unter größten Schwierigkeiten zu Polyurethanharnstoffen umgesetzt werden. So können gemäß US-PS 3 892 696 Polyurethanharnstoffe durch Reaktion linearer NCO-Prepolymerer mit Diaminen in Carbonylgruppen-haltigen Lösungsmitteln hergestellt werden. Die DE-OS 3 134 112 beschreibt die Reaktion von NCO-Prepolymeren auf Basis aliphatischer Diisocyanate mit Diaminen in Toluol/Isopropanol-Mischungen. Beide Verfahren sind nicht universell anwendbar und erfordern die Anwesenheit großer sungsmittelmengen. Dies ist jedoch weder praktikabel noch ökologisch vertretbar.

In der Vergangenheit hat es daher nicht an Versuchen gefehlt, die Reaktivität aliphatischer Polyamine soweit herabzusetzen, daß sie problemlos zu Polyurethanharnstoffen umgesetzt werden können.

Die EP-A-0 206 217 beschreibt spezielle Polyamine, die aufgrund einer sterischen Hinderung der Aminogruppen in ihrer Reaktivität vermindert sind, so daß sie mit speziellen Prepolymeren auf Basis cycloaliphatischer Diisocyanate umgesetzt werden können. Demzufolge besitzen die Diamine der zitierten Veröffentlichung den Nachteil nicht universell anwendbar zu sein. Zusätzlich haben Praxisversuche gezeigt, daß die in der Veröffentlichung genannten Polyamine zu schnell reagieren, um auf handelsüblichen Maschinen mit der notwendigen Verarbeitungssicherheit umgesetzt werden zu können.

Gut praktikabel ist dagegen das in DE-OS 26 37 115 beschriebene Verfahren zur Herstellung von Polyurethanharnstoffen. Gemäß dieser Veröffentlichung werden aliphatische, cycloaliphatische oder araliphatische Diamine durch teilweise Reaktion der Aminogruppen mit Ketonen oder Aldehyden in ihrer Reaktivität vermindert. Um eine hinreichende Reaktivität der reversibel blockierten Amine mit den NCO-Prepolymeren zu gewährleisten, muß den blockierten Polyaminen jedoch Wasser zugesetzt werden. Die Anwesenheit von Wasser im Härtergemisch ist jedoch unter zweierlei Gesichtspunkten von Nachteil: Zum einen läßt sich die Reaktion des Wassers mit den Polyisocyanaten nicht vollständig unterbinden, so daß durch Abspaltung von CO₂ blasige Beschichtungen erhalten wurden. Zum anderen entstehen bei Verwendung aromatischer Polyisocyanate durch deren Hydrolyse aromatische Aminogruppen, die zu deutlichen Vergilbungen Anlaß geben.

Aufgabe der vorliegenden Erfindung war daher die Bereitstellung neuer, universell anwendbarer Härtergemische auf Basis aliphatischer und/oder cycloaliphatischer und /oder araliphatischer Polyamine, die sich hinsichtlich Reaktivität wie die Härtergemische der letztgenannten Veröffentlichung verhalten, jedoch ohne Wasserzusatz appliziert werden können.

Wie jetzt überraschend gefunden wurde, kann diese Aufgabe mit den nachstehend näher beschriebenen erfindungsgemäßen Härtergemischen gelöst werden.

Gegenstand der Erfindung ist ein Härtergemisch für Isocyanatgruppen aufweisende Vorpolymere, bestehend aus
A) 15 bis 90 Gew.-% einer Polyaminkomponente, bestehend aus mindestens einem Polyamin der Formel

   H₂N-R-NH₂

   in welcher
   R für einen zweiwertigen, gegebenenfalls Ethersauerstoffatome oder sekundäre oder tertiäre Aminstickstoffatome aufweisenden (cyclo)aliphatischen Kohlenwasserstoffrest mit insgesamt 2 bis 18 Kohlenstoffatomen oder einen zweiwertigen araliphatischen Kohlenwasserstoffrest mit 8 Kohlenstoffatomen steht,
B) 1 bis 40 Gew.-% einer Phenolkomponente, bestehend aus mindestens einem, gegebenenfalls im Sinne der Isocyanat-Additionsreaktion inerte Substituenten aufweisenden Phenol des Molekulargewichtsbereichs 94 bis 328,
C) 5 bis 70 Gew.-% einer Aldehyd- bzw. Ketonkomponente, bestehend aus mindestens einem (cyclo)aliphatischen Aldehyd und/oder Keton mit 2 bis 8 Kohlenstoffatomen.

Gegenstand der Erfindung ist auch ein Verfahren zur Herstellung von Polyurethanharnstoffen durch Umsetzung von freie Isocyanatgruppen aufweisenden Vorpolymeren mit einem Aminogruppen aufweisenden Härtergemisch, dadurch gekennzeichnet, daß man als Härtergemisch ein solches der genannten Art verwendet.

Gegenstand der Erfindung ist schließlich auch die Verwendung der nach diesem Verfahren erhältlichen Polyurethanharnstoffe zur Herstellung von Beschichtungen auf Leder, Spaltleder oder textilen Substraten.

Zur Herstellung der erfindungsgemäßen Härtergemische genügt es, die Einzelkomponenten A), B) und C) bei Raumtemperatur, d.h. bei unterhalb 30°C liegenden Temperaturen zu vermischen. Unter diesen Bedingungen finden vermutlich zwischen den Einzelkomponenten in untergeordnetem Umfang chemische Reaktionen statt (z.B. bildung zwischen Phenol und Amin bzw. Kondensationsreaktionen zwischen Amin und Carbonylverbindungen), so daß sich die angegebene Zusammensetzung des Härtergemischs auf Art und Menge der zur Herstellung eingesetzten Ausgangsmaterialien ohne Berücksichtigung der spontan ablaufenden, reversiblen Gleichgewichtsreaktionen bezieht.

Zur Herstellung der erfindungsgemäßen Härtergemische werden, jeweils bezogen auf die Summe A) + B) + C), , 15 bis 90 Gew.-%, vorzugsweise 30 bis 70 Gew.-% der Komponente A), 1 bis 40 Gew.-%, vorzugsweise 3 bis 30 Gew.-% der Komponente B) und 5 bis 70 Gew.-%, vorzugsweise 20 bis 60 Gew.-% der Komponente C) miteinander vermischt.

Die Komponente A) besteht aus mindestens einem Polyamin der obengenannten allgemeinen Formel. In diesen Polyaminen liegen zwei (cyclo)aliphatisch gebundene primäre Aminogruppen, gegebenenfalls neben weiteren sekundären oder tertiären Aminogruppen vor.

Beispiele für derartige Polyamine sind Ethylendiamin, 1,2- und 1,3-Diaminopropan, 1,4-Diaminobutan, 1,6-Diaminohexan, das Isomerengemisch von 2,2,4- und 2,4,4-Trimethyl-1,6-diaminohexan, 1,3- und 1,4-Xylylendiamin, Bis-(2-aminoethyl)-amin und Methyl-bis-(3-aminopropyl)-amin. Erfindungsgemäß bevorzugt sind Diamine, die einen oder mehrere cycloaliphatische Ringe aufweisen. Beispielsweise seien folgende Verbindungen genannt: 1,4-Diaminocyclohexan, 4,4'-Diamino-dicyclohexylmethan, 1,3-Diaminocyclopentan, 4,4'-Diamino-dicyclohexylsulfon, 4,4'-Diamino-dicyclohexyl-propan-1,3, 4,4'-Diamino-dicyclohexyl-propan-2,2, 4-Isopropyl-1,2-diaminocyclohexan, 3,3'-Dimethyl-4,4'-Diaminodicyclohexylmethan, 3-Aminomethyl-3,3,5-trimethylcyclohexylamin(Isophorondiamin) oder technisches Bis-aminomethyl-tricyclodecan, wie es unter der Bezeichnung "TCD-Diamin" von der Firma Hoechst AG vertrieben wird. 3,3'-Dimethyl-4,4'-diaminodicyclohexylmethan ist besonders bevorzugt.

Auch Mischungen solcher Diamine sind erfindungsgemäß als Komponente A) einsetzbar.

Bei der Komponente B) handelt es sich um mindestens ein Phenol des Molekulargewichtsbereichs 94 bis 328, das gegebenenfalls im Sinne der Isocyanat-Additionsreaktion inerte Substituenten, insbesondere Alkylsubstituenten aufweisen kann. Beispielhaft genannt seien o-, m- und p-Kresolgemische, die isomeren Xylenole, 2-sek.-Butylphenol, 4-tert.-Butylphenol, 4-(1,13,3-Tetramethylbutyl)-phenol, 4-Cyclohexylphenol, 4-Nonyl-phenolgemische mit verzweigten Nonylresten, Dodecylphenol-Gemische wie sie z.B. durch Anlagerung entsprechender Olefine an Phenole in Gegenwart von Friedel-Crafts-Katalysatoren herstellbar sind, ferner Amyl-, Hexyl-, Heptylphenol, α- und β-Naphthol sowie 2-, 3- und 4-Hydroxybenzoesäureester.

Phenol bzw. C₁-C₃-Alkyl-substituierte Phenole entweichen in der Regel aus den Verfahrensprodukten. Hierdurch kann eine Geruchsbelästigung resultieren. Aus diesem Grund werden vorzugsweise nicht flüchtige Phenolderivate eingesetzt wie z.B. C₄-C₁₈-substituierte Phenole oder die Ester der 2-, 3- oder 4-Hydroxybenzoesäure. Beispielhaft seien die Methyl-, Ethyl- oder Propylester der isomeren Hydroxybenzoesäuren genannt. Ganz besonders bevorzugt werden solche Ester der 4-Hydroxybenzoesäure eingesetzt wie sie unter der Bezeichnung "Paraben-Ester" zur Konservierung von Lebensmitteln verwendet werden. Beispielhaft genannt seien: 4-Hydroxybenzoesäuremethylester, 4-Hydroxybenzoesäureethylester, 4-Hydroxybenzoesäurepropylester und 4-Hydroxybenzoesäurebutylester.

Erfindungsgemäß als Komponente C) im Härtergemisch enthaltene Aldehyde bzw. Ketone sind solche mit 2 bis 8, vorzugsweise 3 bis 6 Kohlenstoffatomen. Beispielhaft genannt seien Acetaldehyd, Propionaldehyd, Butyraldehyd, Isobutyraldehyd, Aceton, Methylethylketon, Methylisobutylketon, Diisopropylketon, Cyclopentanon und Cyclohexanon. Methylethylketon ist besonders bevorzugt.

Bei der Herstellung der Härtergemische ist die Mitverwendung von im Sinne der Isocyanat-Additionsreaktion inerten, Aldehyd- und Ketongruppen-freien Lösungsmitteln im allgemeinen nur dann erforderlich, wenn die Komponente C) in einer Menge von weniger als 20 Gew.-%, bezogen auf das Gesamtgewicht der Komponenten A) bis C), zum Einsatz gelangt. Derartige Lösungsmittel sind beispielsweise Ethylacetat, Butylacetat, monomethyletheracetat, Toluol, Xylol oder beliebige Gemische derartiger Lösungsmittel. Derartige Lösungsmittel können auch zum Lösen der mit den erfindungsgemäßen Härtergemischen auszuhärtenden NCO-Prepolymeren eingesetzt werden. Im allgemeinen liegen in den Reaktivsystem, bestehend aus NCO-Prepolymeren und Härtergemisch 0 bis 70 Gew.-%, vorzugsweise 0 bis 50 Gew.-% und besonders bevorzugt 0 bis 30 Gew`-%, bezogen auf Gesamtgemisch, an, gegenüber Isocyanatgruppen inerten, Aldehyd- und Ketongruppen-freien Lösungsmitteln der beispielhaft genannten Art vor.

Die beim erfindungsgemäßen Verfahren einzusetzenden NCO-Gruppen enthaltenden Prepolymeren sind solche der aus der Polyurethanchemie an sich bekannten Art und werden durch Umsetzung von überschüssigen Mengen an organischen Polyisocyanaten mit organischen Polyhydroxylverbindungen hergestellt, wobei sich oftmals eine destillative Entfernung des nicht umgesetzten Überschusses an polyisocyanat anschließt.

Geeignete Ausgangspolyisocyanate sind solche mit aliphatisch, cycloaliphatisch oder aromatisch gebundenen Isocyanatgruppen. Vorzugsweise werden die entsprechenden Diisocyanate eingesetzt. Die bevorzugten Ausgangsdiisocyanate weisen ein Molekulargewicht von 168 bis 300 auf. Beispielhaft genannt seien Hexamethylendiisocyanat (HDI), 1-Isocyanato-3,3,5-trimethyl-5-isocyanatomethylcyclohexan (Isophorondiisocyanat, abgekürzt: IPDI), 1-Isocyanato-1-methyl-4(3)-isocyanatomethylcyclohexan, 4,4'-Diisocyanatodicyclohexylmethan, 2,4-Diisocyanatotoluol, dessen technische Gemische mit bis zu 35 Gew.-%, bezogen auf Gemisch, an 2,6-Diisocyanatotoluol, 4,4'-Diisocyanatodiphenylmethan, dessen technische Gemische mit 2,4'- und gegebenenfalls 2,2'-Diisocyanatodiphenylmethan oder mit seinen höheren Homologen.

Zur Herstellung der NCO-Prepolymeren geeignete hydroxylverbindungen sind solche die mindestens 2, vorzugsweise 2 bis 10 und besonders bevorzugt 2 bis 4 alkoholische Hydroxylgruppen aufweisen. Grundsätzlich geeignet sind die an sich bekannten höhermolekularen Polyole, wie sie als Rohstoffe in der Polyurethan-Chemie Verwendung finden. Vertreter solcher Verbindungen sind z.B. in High Polymers, Vol. XVI, "Polyurethanes, Chemistry and Technology", verfaßt von Saunders-Frisch, Interscience Publishers, New York, London, Band I, 1962, Seiten 32 bis 42 und Band II, 1964, Seiten 5 bis 6 und 198 bis 199, sowie im Kunststoff-Handbuch, Band VII, Vieweg-Höchtlen, Carl-Hanser-Verlag, München, 1966, z.B. auf den Seiten 45 bis 71, beschrieben.

Vorzugsweise handelt es sich bei den Polyhydroxylverbindungen um Ether-, Ester-, Carbonat- und/oder Urethangruppen aufweisende Polyhydroxylverbindungen des kulargewichtsbereichs 800 bis 5000. Es können sowohl Polyhydroxylverbindungen eingesetzt werden, die eine Art der genannten Gruppierungen aufweisen als auch solche, die gleichzeitig zwei oder mehrere Gruppierungen der genannten Art in einem Molekül aufweisen. Auch die Verwendung von Gemischen unterschiedlicher Polyhydroxylverbindungen der genannten Art ist möglich.

Geeignete Polyetherpolyole sind solche, die durch Alkoxylierung von geeigneten Startermolekülen wie beispielsweise Wasser, Ethylenglykol, Propylenglykol, methylolpropan, Glycerin, Sorbit oder beliebigen Gemischen derartiger Startermoleküle unter Verwendung von Ethylenoxid und/oder Propylenoxid als Alkoxylierungsmittel im Gemisch oder in beliebiger Reihenfolge zugänglich sind.

Geeignete Polyesterpolyole sind solche der bekannten Art und stellen Umsetzungsprodukte von vorzugsweise zweiwertigen und gegebenenfalls zusätzlich dreiwertigen Alkoholen der zuletzt beispielhaft genannten Art mit vorzugsweise zweiwertigen Carbonsäuren oder den Anhydriden zweiwertiger Carbonsäuren dar. Geeignete Carbonsäuren sind beispielsweise Adipinsäure, Phthalsäure, Isophthalsäure, Tetrahydrophthalsäure, Hexahydrophthalsäure, Maleinsäure, dimerisierte und trimerisierte ungesättigte Fettsäuren, gegebenenfalls in Mischung mit monomeren ungesättigten Fettsäuren.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol, Tetraethylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Sehr gut geeignet sind auch Hydroxylgruppen aufweisende Polyester-Polycarbonate, wie sie z.B. gemäß DE-AS 1 770 245 zugänglich sind. Solche Verbindungen werden z.B. durch Reaktion von C-Caprolacton mit Polyolen, wie z.B. Hexandiol-1,6, und anschließende Umsetzung der so erhaltenen Esterglykole mit Diphenylcarbonat hergestellt.

Gegebenenfalls können vor, während oder nach der Herstellung der erfindungsgemäß einzusetzenden NCO-Prepolymeren Polyisocyanate einer NCO-Funktionalität ≥3 zugesetzt werden, so wie dies z.B. in DE-OS 30 11 711 beschrieben wird. Die Mitverwendung von solchen Polyisocyanaten ist jedoch weniger bevorzugt.

Bei der Herstellung der NCO-Prepolymeren können gegebenenfalls auch niedermolekulare Polyole wie sie als tenverlängerungsmittel oder Vernetzer an sich bekannt sind in Mengen von bis zu 40 OH-Äquivalentprozent, bezogen auf alle Polyhydroxylverbindungen, mitverwendet werden. Beispielhaft genannt seien in diesem Zusammenhang: Ethandiol, Propandiol-1,2, Propandiol-1,3, Butandiol-1,3, Butandiol-1,4, Pentandiol-1,5, Hexandiol-1,6, 2-Ethyl-hexandiol-1,3, Trimethylolpropan oder Glycerin.

Bei der Herstellung der NCO-Prepolymeren werden die beispielhaft genannten Ausgangsmaterialien im allgemeinen in solchen Mengenverhältnissen eingesetzt, die einem NCO/OH-Äquivalentverhältnis von mindestens 1,8:1 entsprechen. Zweck Vermeidung von unerwünschten Kettenverlängerungsreaktionen empfiehlt sich oftmals die Verwendung eines hohen Überschusses an Ausgangspolyisocyanat. Wie bereits erwähnt wird das überschüssige Ausgangspolyisocyanat dann oft im Anschluß an die Umsetzung destillativ, beispielsweise durch Dünnschichtdestillation entfernt.

Bei der Durchführung des erfindungsgemäßen Verfahrens werden die NCO-Prepolymeren in flüssiger Form (aus Schmelze) oder aus hochkonzentrierten, vorzugsweise mindestens 70 % Feststoff enthaltenden Lösungen verarbeitet.

NCO-Prepolymere auf Basis von Hydroxypolyethern, insbesondere auf Basis von oxypropylen- und/oder oxyethylengruppenhaltigen Polyethern, stellen zumeist bei Raumtemperatur flüssige Produkte mit relativ niedriger Viskosität dar und werden vorzugsweise ohne Lösungsmittelzusatz verarbeitet.

NCO-Prepolymere auf Polyesterbasis sind zumeist höherviskos oder gar erstarrend und werden daher bevorzugt in Form ihrer Lösungen eingesetzt.

Die Viskosität dieser NCO-Prepolymeren bzw. NCO-Prepolymerlösungen soll im Bereich von 300 bis 100 000 mPa.s/25°C, bevorzugt 500 bis 15 000 und insbesondere 500 bis 5000 mPa.s/25°C liegen.

Bei der Durchführung des erfindungsgemäßen Verfahrens zur Herstellung von Polyurethanharnstoffen werden die NCO-Prepolymeren oder ihre Lösungen mit den erfindungsgemäßen Härtergemischen vermischt, wobei die Mengenverhältnisse so gewählt werden, daß im resultierenden tionsgemisch das Äquivalentverhältnis von Isocyanatgruppen zu primären Aminogruppen der Komponente A) des Härtergemischs bei 0,9:1 bis 1,3:1, vorzugsweise 1:1 bis 1,2:1 und besonders bevorzugt 1:1 bis 1,1:1 liegt.

Eine im Prinzip mögliche, jedoch weniger bevorzugte Variante besteht darin, zunächst aus einem Teil der NCO-Prepolymeren mit der Gesamtmenge des Härtergemischs analog der Lehre der DE-OS 26 37 115 ein "modifiziertes Härtergemisch" herzustellen und dieses anschließend mit der restlichen Menge der NCO-Prepolymeren zu vereinigen. Auch bei dieser weniger bevorzugten Arbeitsweise werden die Mengenverhältnisse der Reaktionspartner so gewählt, daß die Gesamtmengen der zum Einsatz gelangenden Ausgangsmaterialien den oben gemachten Angaben bezüglich des Äquivalentverhältnisses entsprechen.

Die Reaktion der NCO-Prepolymeren mit dem Härtergemisch findet im allgemeinen bei Temperaturen von 10 bis 100°C, vorzugsweise 40 bis 80°C statt.

Die Einstellung der gewünschten Reaktivität geschieht durch Variation der Mengen an Komponente B) und/oder C) im Härtergemisch. Eine Steigerung der Mengenanteile an Komponente B) und/oder C) im Härtergemisch führt zu einer Verminderung der Härtungsgeschwindigkeit. Die jeweils gewünschte Härtungsgeschwindigkeit läßt sich durch Versuchsreihen schnell und problemlos einstellen.

Die Menge an Komponente C) im Härtergemisch, insbesondere der bevorzugt als Komponente C) eingesetzten Ketone, sowie die Menge der gegebenenfalls eingesetzten Aldehyd- und Ketongruppen-freien Hilfslösungsmittel wird im übrigen vorzugsweise so gewählt, daß die Gemische aus NCO-Prepolymeren und Härter bei 22°C eine Viskosität von 100 bis 5.000 mPa.s aufweisen. Darüber hinaus sind solche Gemische bevorzugt, die ausgehend von dieser Anfangsviskosität innerhalb eines Zeitraums von ca. 30 bis 500 Sekunden eine Viskosität von ca. 60 000 mPa.s erreichen. Besonders bevorzugt sind solche Gemische, die diese Grenzviskosität, oberhalb derer eine Verarbeitung der Gemische kaum mehr möglich ist, nach 80 bis 180 Sekunden erreichen.

In diesem Zusammenhang hat sich gezeigt, daß solche Härtergemische besonders bevorzugt sind, die als Komponente A) 4,4'-Diamino-3,3'-dimethyl-dicyclohexylmethan enthalten, da entsprechende Reaktionsgemische mit NCO-Prepolymeren relativ lange dünnflüssig bleiben und schließend spontan abbinden.

Das erfindungsgemäße Verfahren wird insbesondere für Reaktivbeschichtungen bzw. -lackierungen angewendet. Dabei können an sich bekannte Hilfsmittel und Zusatzmittel wie Verlaufsmittel, Verdickungsmittel und Pigmente mitverwendet werden. Das Verfahren kann zur Herstellung von Beschichtungen auf Textil, Leder, geschäumten und kompakten Kunststoffen sowie zur Lackierung von Papier, Holz und Metall Anwendung finden.

Besonders gut geeignet ist das erfindungsgemäße Verfahren zur Beschichtung von Leder, Spaltleder oder textilen Substraten, insbesondere nach dem Prinzip der Umkehrbeschichtung.

Die folgenden Beispiele sollen das erfindungsgemäße Verfahren näher erläutern, jedoch nicht einschränken. Wenn nicht anders vermerkt, sind Angaben in "Teilen" und Mengenangaben in "%" als Gewichtsteile bzw. Gewichtsprozente zu verstehen.

### Beispiele

### Prepolymer A:

3000 g eines Polyetherpolyols der OH-Zahl 48, hergestellt durch Propoxylierung von Trimethylolpropan, werden mit 1400 g 2,4-Diisocyanatotoluol 5 Stunden unter Rühren auf 70°C erhitzt. Anschließend wird der Überschuß an Diisocyanat durch Vakuum-Dünnschichtdestillation entfernt. Es entsteht ein Isocyanatendgruppen enthaltendes Prepolymer mit einem NCO-Gehalt von 3,2 % und einer Viskosität von 6000 mPa.s/22°C.

### Prepolymer B:

3000 g eines Polyetherpolyols des Molekulargewichts 2000, hergestellt durch Propoxylierung von Propylenglykol, 1000 g eines Polyetherpolyols des Molekulargewichts 1000, ebenfalls hergestellt durch Propoxylierung von Propylenglykol und 1100 g Isophorondiisocyanat werden unter Zusatz von 0,2 Gew.-% Dibutylzinndilaurat bei 100°C prepolymerisiert. Man erhält ein NCO-Prepolymer mit einem NCO-Gehalt von 4,0 % und einer Viskosität von 8500 mPa.s/22°C.

### Prepolymer C:

6570 g eines Polyesterdiols des Molekulargewichts 1700, hergestellt durch Kondensation von Adipinsäure mit einem Gemisch aus Hexandiol-1,6 und Neopentylglykol im Molverhältnis 1,65:1, 87 g Butandiol-1,4, 65 g Trimethylolpropan und 1680 g 2,4-Toluylendiisocyanat werden in 2100 g Ethylacetat bei 60°C bis zur Konstanz des NCO-Gehaltes prepolymerisiert. Man erhält die 80 %ige Lösung eines NCO-Prepolymers mit einem NCO-Gehalt von 3,2 % und einer Viskosität von 2000 mPa.s/22°C.

### Prepolymer D:

2000 g eines Polyestercarbonatdiols des Molekulargewichts 2000, hergestellt gemäß DE-AS 17 70 245 durch Umsetzung von Hexandiol-1,6 mit C-Caprolacton im Molverhältnis 1:1 und anschließende weitere Umsetzung des so erhaltenen Esterdiols mit Diphenylcarbonat, 22 g 2-Ethylhexandiol-1,3 und 350 g 2,4-Toluylendiisocyanat werden mit 593 g Toluol bei 60°C bis zur Konstanz des NCO-Gehaltes prepolymerisiert. Man erhält die 80 %ige Lösung eines NCO-Prepolymers mit einem NCO-Gehalt von 2,4 % und einer Viskosität von 4000 mPa.s/22°C.

### Allgemeine Vorschrift zur Herstellung der Härtermischung

Diamin, Phenolderivat und Aldehyd bzw. Keton werden in den angegebenen Mengen bis zur Homogenität bei Raumtemperatur gerührt. Danach ist die Härtermischung gebrauchsfertig.

### Reaktivitätstest

In einem 500 ml Probenbecher werden 0,1 Val NCO-Prepolymer bis zur jeweils angegebenen Gesamtlösemittelkonzentration [= Gesamtmenge an inerten Lösungsmitteln (Ethylacetat) und der im jeweiligen Härtergemisch vorliegenden Komponente C) (Methylethylketon)] mit Ethylacetat verdünnt und mit 0,1 Val Härtermischung (entsprechend einem Äquivalentverhältnis von Isocyanatgruppen des Prepolymeren zu primären Aminogruppen der Komponente A) des Härtergemischs von 1:1) bei 22°C 10 Sekunden mit einem Glasstab von Hand durchgemischt. Danach wird der Viskositätsanstieg (Haake-Viskosimeter-Prüfkörper E 100) der Reaktionsmischung in Abhängigkeit von der Zeit gemessen. Die für das erfindungsgemäße Verfahren wesentliche und nachstehend in sec angegebene Zeit ist die Zeit, in der die Reaktionsmischung eine Viskosität von 60 000 mPa.s erreicht.

### Beispiel 1

### Härtermischung 1:

300 g 4,4'-Diamino-3,3'-dimethyl-dicyclohexylmethan
100 g p-Hydroxybenzoesäureethylester
650 g Methylethylketon
   a) 131 Teile Prepolymer A
      41 Teile Härtermischung 1
      Anfangsviskosität: 2.100 mPa.s
      Reaktivität: 166 sec
   b) 131 Teile Prepolymer C
      41 Teile Härtermischung 1
      68 Teile Ethylacetat
      Anfangsviskosität: 170 mPa.s
      Reaktivität: 220 sec
   C) 175 Teile Prepolymer D
      41 Teile Härtermischung 1
      95 Teile Ethylacetat
      Anfangsviskosität: 210 mPa.s
      Reaktivität: 148 sec

### Beispiel 2

### Härtermischung 2:

300 g 4,4'-Diamino-3,3'-dimethyl-dicyclohexylmethan
50 g p-Hydroxybenzoesäureethylester
700 g Methylethylketon
   a) 131 Teile Prepolymer C
      41 Teile Härtermischung 2
      65 Teile Ethylacetat
      Anfangsviskosität: 160 mPa.s
      Reaktivität: 214 sec
   b) 175 Teile Prepolymer D
      41 Teile Härtermischung 2
      92 Teile Ethylacetat
      Anfangsviskosität: 210 mPa.s
      Reaktivität: 154 sec

### Beispiel 3

### Härtermischung 3:

220 g 4,4'-Diamino-3,3'-dimethyl-dicyclohexylmethan
280 g p-Hydroxybenzoesäuremethylester
500 g Methylethylketon
   131 Teile Prepolymer C
   54 Teile Härtermischung 3
   78 Teile Ethylacetat
   Anfangsviskosität: 175 mPa.s
   Reaktivität: 100 sec

### Beispiel 4

### Härtermischung 4:

180 g 4,4'-Diamino-3,3'-dimethyl-dicyclohexylmethan
320 g p-Hydroxybenzoesäurepentylester
500 g Methylethylketon
   131 Teile Prepolymer C
   66 Teile Härtermischung 4
   78 Teile Ethylacetat
   Anfangsviskosität: 170 mPa.s
   Reaktivität: 110 sec

### Beispiel 5

### Härtermischung 5:

300 g 3,3,5-Trimethyl-5-aminomethyl-cyclohexylamin
100 g p-Hydroxybenzoesäureethylester
300 g Methylethylketon
   131 Teile Prepolymer C
   20 Teile Härtermischung 5
   81 Teile Ethylacetat
   Anfangsviskosität: 160 mPa.s
   Reaktivität: 564 sec

### Beispiel 6

### Härtermischung 6:

300 g 3,3,5-Trimethyl-5-aminomethyl-cyclohexylamin
50 g p-Hydroxybenzoesäureethylester
300 g Methylethylketon
   131 Teile Prepolymer C
   18 Teile Härtermischung 6
   80 Teile Ethylacetat
   Anfangsviskosität: 160 mPa.s
   Reaktivität: 480 sec

### Beispiel 7

### Härtermischung 7:

300 g 3,3,5-Trimethyl-5-aminomethyl-cyclohexylamin
20 g p-Hydroxybenzoesäureethylester
300 g Methylethylketon
   131 Teile Prepolymer C
   17 Teile Härtermischung 7
   79 Teile Ethylacetat
   Anfangsviskosität: 160 mPa.s
   Reaktivität: 343 sec

Die Beispiele 5 bis 7 zeigen die Abhängigkeit der Reaktivität von der Menge des als Komponente B) eingesetzten Phenolderivates.

### Beispiel 8

### Härtermischung 8:

300 g 3,3,5-Trimethyl-5-aminomethyl-cyclohexylamin
5 g p-Hydroxybenzoesäureethylester
80 g Methylethylketon
   131 Teile Prepolymer C
   11 Teile Härtermischung 8
   83 Teile Ethylacetat
   Anfangsviskosität: 170 mPa.s
   Reaktivität: 220 sec

### Beispiel 9

### Härtermischung 9:

210 g 4,4'-Diamino-dicyclohexylmethan
80 g p-Hydroxybenzoesäureethylester
280 g Methylethylketon
   175 Teile Prepolymer D
   28 Teile Härtermischung 9
   105 Teile Ethylacetat
   Anfangsviskosität: 220 mPa.s
   Reaktivität: 150 sec

### Beispiel 10

### Härtermischung 10:

300 g 4,4'-Diamino-3,3'-dimethyl-dicyclohexylmethan
100 g p-Hydroxybenzoesäureethylester
270 g Methylethylketon
   105 Teile Prepolymer B
   26 Teile Härtermischung 10
   Anfangsviskosität: 2.800 mPa.s
   Reaktivität: 190 sec
(ohne zusätzliche Lösungsmittel)

Die Kombination von Prepolymer B) mit Härtermischung 10 eignet sich insbesondere zur Herstellung lösemittelarmer Beschichtungen (Gesamtlösemittelanteil nur 8,1 %).

### Beispiel 11

### Härtermischung 11:

200 g 4,4'-Diamino-3,3'-dimethyl-dicyclohexylmethan
200 g iso-Nonylphenol (technisches Isomerengemisch)
500 g Methylethylketon
   131 Teile Prepolymer A
   53 Teile Härtermischung 11
   Anfangsviskosität: 2.200 mPa.s
   Reaktivität: 600 sec

### Beispiel 12 (Vergleich)

### Härtermischung 12:

200 g 4,4'-Diamino-3,3'-dimethyl-dicyclohexylmethan
800 g Methylethylketon

Bei Kombination von Härtermischung 12 mit Prepolymer A geliert die Mischung spontan. Eine Vermischung der Komponenten ist nicht möglich.

### Beispiel 13 (Vergleich)

### Härtermischung 13:

200 g 3,3,5-Trimethyl-5-aminomethyl-cyclohexylamin
800 g Methyelthylketon

Bei Kombination von Härtermischung 13 mit Prepolymer A geliert die Mischung spontan. Eine Vermischung der Komponenten ist nicht möglich.

Die Beispiele 12 und 13 demonstrieren den Reaktivitätsvermindernden Einfluß des Phenolderivates.

### Beispiel 14

### Anwendungsbeispiel für ein technisches, kontinuierliches Verfahren

Spaltleder wird nach dem Umkehrverfahren mittels einer Pistolenspritzmaschine für zwei Komponenten und äußerer Vermischung beschichtet. Die Pistolenspritzmaschine weist als Hauptbestandteile einen heizbaren Vorratsbehälter für das Vorpolymerisat, einen Vorratsbehälter für den Härter, jeweils eine Dosiervorrichtung für Härter und Vorpolymerisat und zum äußeren Mischen und Verstäuben der Komponenten eine Sprühpistole mit einer konzentrischen Düse, einer Zuführung für das Vorpolymerisat, einer Zuführung für den Härter und einer führung für Preßluft auf.

Das Vorpolymerisat C wird in den beheizbaren Vorratsbehälter gegeben und zwecks Erniedrigung seiner Viskosität auf 60°C erwärmt. Die Härtermischung 1 wird zusammen mit 10 Gew.-% einer TiO₂-Weißpigmentzubereitung in den für sie bestimmten Behälter gegeben. Durch die Pigmentzugabe erhöht sich das NH₂-Äquivalentgewicht der Härtermischung auf 458. Über getrennte Schläuche mit dazwischenliegenden Dosiervorrichtungen werden Vorpolymerisat und Härter im Verhältnis ihrer Äquivalentgewichte in die Pistole gefördert. Der Mengendurchsatz ist variierbar und beträgt beispielsweise 440 g Prepolymer C) und 150 g Härtermischung (einschließlich Pigmentzusatz) pro Minute. Am Austritt der Pistole werden die beiden Komponenten durch den mit der Preßluft (Betriebsdruck 4,5 kg/cm²) erzeugten Luftwirbel vermischt. Die Pistole wird zur wechselnden Abgabe in der Breite von 100 cm rund 28 mal pro Minute hin und her bewegt.

Unter der Pistole läßt man eine mit Silikonkautschuk beschichtete Matrize, die den Abdruck von natürlichem Leder trägt, mit einer Geschwindigkeit von 1,6 Meter/Minute durchlaufen. Die auf die Matrize gesprühte Masse verläuft filmartig und beginnt nach etwa 1 Minute, vom Zeitpunkt des Aufsprühens an gerechnet, abzubinden. Auf die reagierende Masse wird das zu beschichtende Spaltleder gelegt und angedrückt. Die gesamte Beschichtung passiert anschließend einen auf 80°C geheizten Trockenkanal. Nach etwa 6 Minuten, vom Zeitpunkt des Aufsprühens an gerechnet, wird die Beschichtung klebfrei von der Matrize abgezogen.
Die Polyurethanharnstoff-Schicht hat eine Stärke von 0,22 bis 0,25 mm.

Das beschichtete Spaltleder hat eine natürlichem Leder täuschend ähnliche Narbung, ist nach kurzer Zeit trocken, stapelbar und auf gängigen Schuhmaschinen verarbeitbar. Die Haftung zwischen Beschichtung und Spaltleder ist ausgezeichnet, der Griff angenehm trocken.
Die beschichteten Leder überstehen den Flexometertest.
1. trocken mit über 200 000 Knickungen ohne Beschädigung
2. naß mit über 100 000 Knickungen ohne Beschädigung
3. bei -25°C mit weit mehr als 10 000 Knickungen ohne Beschädigung.

Der Heißbügeltest bei 150°C verläuft ohne sichtbare Beschädigung. Das Polyurethanharnstoff-Elastomere hat folgende mechanische Eigenschaften.
Bruchdehnung: 620 %
Weiterreißfestigkeit: 350 N/cm
Zugfestigkeit: 21,5 mPa

## Patentansprüche

1. Härtergemisch für Isocyanatgruppen aufweisende Vorpolymere, bestehend aus
A) 15 bis 90 Gew.-% einer Polyaminkomponente, bestehend aus mindestens einem Polyamin der Formel 1
H₂N-R-NH₂
in welcher
R für einen zweiwertigen, gegebenenfalls Ethersauerstoffatome oder sekundäre oder tertiäre Aminstickstoffatome aufweisenden (cyclo)aliphatischen Kohlenwasserstoffrest mit insgesamt 2 bis 18 Kohlenstoffatomen oder einen zweiwertigen araliphatischen Kohlenwasserstoffrest mit 8 Kohlenstoffatomen steht,
B) 1 bis 40 Gew.-% einer Phenolkomponente, bestehend aus mindestens einem, gegebenenfalls im Sinne der Isocyanat-Additionsreaktion inerte Substituenten aufweisenden Phenol des Molekulargewichtsbereichs 94 bis 328,
C) 5 bis 70 Gew.-% einer Aldehyd- bzw. Ketonkomponente, bestehend aus mindestens einem (cyclo)aliphatischen Aldehyd und/oder Keton mit 2 bis 8 Kohlenstoffatomen.

2. Härtergemisch gemäß Anspruch 1, dadurch gekennzeichnet, daß die Komponente A) aus 4,4'-Diamino-3,3'-dimethyl-dicyclohexylmethan besteht.

3. Härtergemisch gemäß Anspruch 1 und 2, dadurch gekennzeichnet, daß die Komponente B) aus Hydroxybenzoesäurealkylester besteht.

4. Härtergemisch gemäß Anspruch 1 bis 3, dadurch gekennzeichnet, daß die Komponente B) aus 4-Hydroxybenzoesäureethylester besteht.

5. Härtergemisch gemäß Anspruch 1 bis 4, dadurch gekennzeichnet, daß die Komponente C) aus einem Keton mit 3 bis 6 Kohlenstoffatomen besteht.

6. Verfahren zur Herstellung von Polyurethanharnstoffen durch Umsetzung von freie Isocyanatgruppen aufweisenden Vorpolymeren mit einem Aminogruppen aufweisenden Härtergemisch, dadurch gekennzeichnet, daß man als Härtergemisch ein solches der in Anspruch 1 genannten Art verwendet.

7. Verfahren gemäß Anspruch 6, dadurch gekennzeichnet, daß man die Umsetzung unter Mitverwendung von organischen Lösungsmitteln für das Vorpolymere und/oder das Härtergemisch durchführt.

8. Verwendung der gemäß Anspruch 6 und 7 erhältlichen Polyurethanharnstoffe zur Beschichtung von Leder, Spaltleder oder textilen Substraten.

## Claims

1. A curing mixture for prepolymers containing isocyanate groups, consisting of
A) from 15 to 90 wt.% of a polyamine component consisting of at least one polyamine corresponding to the formula
H₂N-R-NH₂
wherein
R represents a divalent (cyclo)aliphatic hydrocarbon group having a total of 2 to 18 carbon atoms and optionally containing ether oxygen atoms or secondary or tertiary amine nitrogen atoms, or a divalent araliphatic hydrocarbon group having 8 carbon atoms,
B) from 1 to 40 wt.% of a phenol component consisting of at least one phenol in the molecular weight range of from 94 to 328 optionally containing substituents which are inert in isocyanate addition reactions,
C) from 5 to 70 wt.% of an aldehyde or ketone component consisting of at least one (cyclo)aliphatic aldehyde and/or ketone having 2 to 8 carbon atoms.

2. A curing mixture according to claim 1, characterised in that component A) consists of 4,4'-diamino-3,3'-dimethyldicyclohexylmethane.

3. A curing mixture according to claims 1 and 2, characterised in that component B) consists of hydroxybenzoic alkyl ester.

4. A curing mixture according to claims 1 to 3, characterised in that component B) consists of ethyl 4-hydroxybenzoate.

5. A curing mixture according to claims 1 to 4, characterised in that component C) consists of a ketone having 3 to 6 carbon atoms.

6. A process for the preparation of polyurethane ureas by the reaction of prepolymers containing free isocyanate groups with a curing mixture containing amino groups, characterised in that the curing mixture used is of the type given in Claim 1.

7. A process according to claim 6, characterised in that the reaction is carried out with the concomitant use of organic solvents for the prepolymer and/or the curing mixture.

8. The use of polyurethane ureas obtainable according to claims 6 and 7 for coating leather, split leather or textile substrates.

## Revendications

1. Mélange durcisseur pour prépolymères à groupes isocyanate, consistant en
A) 15 à 90% en poids d'un composant polyamine qui consiste en au moins une polyamine de formule
H₂N-R-NH₂
dans laquelle
R représente un radical hydrocarboné (cyclo)aliphatique divalent, contenant le cas échéant des atomes d'oxygène d'éther ou des atomes d'azote d'amines secondaires ou tertiaires, avec au total 2 à 18 atomes de carbone, ou bien un radical hydrocarboné araliphatique divalent contenant 8 atomes de carbone,
B) 1 à 40% en poids d'un composant phénol qui consiste en au moins un phénol, portant le cas échéant des substituants inertes dans la réaction d'addition des isocyanates, de poids moléculaire 94 à 328,
C) 5 à 70% en poids d'un composant aldéhyde et/ou cétone qui consiste en au moins un aldéhyde et/ou au moins une cétone (cyclo)aliphatique contenant 2 à 8 atomes de carbone.

2. Mélange durcisseur selon la revendication 1, caractérisé en ce que le composant A) consiste en le 4,4'-diamino-3,3'-diméthyldicyclohexylméthane.

3. Mélange durcisseur selon les revendications 1 et 2, caractérisé en ce que le composant B) consiste en un hydroxybenzoate d'alkyle.

4. Mélange durcisseur selon les revendications 1 à 3, caractérisé en ce que le composant B) consiste en le 4-hydroxybenzoate d'éthyle.

5. Mélange durcisseur selon les revendications 1 à 4, caractérisé en ce que le composant C) consiste en une cétone en C₃ - C₆.

6. Procédé de préparation de polyuréthaneurées par réaction de prépolymères à groupes isocyanate libres avec un mélange durcisseur contenant des groupes amino, caractérisé en ce que l'on utilise en tant que mélange durcisseur un mélange durcisseur selon la revendication 1.

7. Procédé selon la revendication 6, caractérisé en ce que l'on procède à la réaction avec utilisation conjointe de solvants organiques pour le prépolymère et/ou pour le mélange durcisseur.

8. Utilisation des polyuréthaneurées obtenues selon les revendications 6 et 7 pour l'application de revêtements sur du cuir, du cuir refendu ou des supports textiles.
